# EUROPEAN PATENT SPECIFICATION

(11) **EP 4 689 947 B1**
(45) Date of publication and mention of the grant of the patent: **04.11.2026**
(21) Application number: 24725070.7
(22) Date of filing: 24.04.2024
(51) Int. Cl.: G06F 21/53, G06F 21/57

(54) **CRYPTOAGILE NETWORK MANAGEMENT**
KRYPTOAGILE NETZWERKVERWALTUNG
GESTION DE RÉSEAU CRYPTOAGILE

(30) Priority: 10.05.2023 EP 23172595
(43) Date of publication of application: 11.02.2026
(73) Proprietor: Siemens Aktiengesellschaft, 80333 München (DE)
(72) Inventor: AGHAIE, Anita, 81739 München (DE); ASCHAUER, Hans, 81739 München (DE); CHE, Kai, 81739 München (DE); DE SANTIS, Fabrizio, 81739 München (DE); FALK, Rainer, 81739 München (DE); FURCH, Andreas, 81739 München (DE); SAFIEH, Malek, 81739 München (DE); SCHNEIDER, Daniel, 81739 München (DE); VAIRA, Antonio, 81739 München (DE); ZESCHG, Thomas, 81739 München (DE); ZWANZGER, Johannes, 81739 München (DE)
(74) Representative: Siemens Patent Attorneys
(86) International application number: PCT/EP2024/061148
(87) International publication number: WO 2024/231101

(56) References cited:
- DE-A1- 102016 204 684
- US-A1- 2023 107 763
- CRAIG CHRISTOPHER ALEXANDER ANTONE: "Cloud Anchor: An Exploration of Service Integrity Attestation with Hardware Roots of Trust", 1 May 2018 (2018-05-01), XP093092789, Retrieved from the Internet <URL:https://trace.tennessee.edu/cgi/viewcontent.cgi?article=6437&context=utk_gradthes> [retrieved on 20231018]

## Description

The present invention relates to a cryptoagile network having hardware trust anchors (HTA), particularly accessible via a protocol-agnostic middleware layer to a number of network devices. Moreover, the present invention relates to a method for cryptoagile network management.

Industrial devices and environment increasingly rely on embedded systems. Guaranteeing a secure operation of such systems using cryptographic protection is an important task. Cryptographic functions safeguard the integrity, confidentiality and authenticity of embedded systems so that malicious or unauthorized accesses and attacks are thwarted.

One possibility for securing an embedded system is to integrate a hardware-based trust anchor that may be employed to perform various security-related tasks, such as for example generating and distributing cryptographic keys at runtime, creating and validating integrity test values of application and configuration data, signing data and certificates, and providing random numbers of cryptographically large enough entropy.

Applications and/or connected devices within the devices or environments gain access to such trust anchors via a predefined anchor interface. For example, document DE 10 2016 204 684 A1 discloses methods and systems for providing a cryptographic security function for the operation of a device.

Usually, hardware-based trust anchors are directly built into the device so that the functionality of the anchors is defined at the design stage, often in turn-key solutions. Updating such anchors is often cumbersome and requires in some cases complete or at least partial replacement of the hardware. However, methods and standards in post-quantum cryptography require cryptoagility, i.e. possibilities of resource-efficient and rapid exchanges or updates of cryptographic cores if the security of their used cryptographic algorithms are outdated due to technological or cryptographic advances.

S. Richter, M. Thornton, I. Khan, H. Scott, K. Jaksch, U. Vogl, B. Stiller, G. Leuchs, C. Marquardt, and N. Korolkova, Agile and Versatile Quantum Communication: Signatures and Secrets, Phys. Rev. X 11, 011038 (2021) discloses an agile and versatile quantum communication system.

There is an increasing need for users and manufacturers of industrial devices to find solutions that facilitate simple switches between different cryptographic algorithms without requiring extensive knowledge from the user.

One of the objectives of the present invention is therefore to provide solutions for cryptographically securing industrial devices or network environments that comply with requirements of cryptoagility.

In line with a first aspect of the present invention, a cryptoagile network comprises a plurality of local devices, one or more first hardware trust anchors of a first anchor type, the first hardware trust anchors being configured to perform cryptographic operations and/or process cryptographic information items according to a number of first cryptographic algorithms, and one or more second hardware trust anchors of a second anchor type different from the first anchor type, the second hardware trust anchors being configured to perform cryptographic operations and/or process cryptographic information items according to a number of second cryptographic algorithms different from the first cryptographic algorithms. The cryptoagile network further comprises an anchor selection provider coupled between the plurality of local devices and the first and second hardware trust anchors. The anchor selection provider is configured to receive requests with cryptographic requirements for execution of cryptographic operations and/or for provision of cryptographic material/data from the plurality of local devices and to select, based on the received cryptographic requirements, one or more of the first and second hardware trust anchors for execution of the requested cryptographic operations and/or for provision of the requested cryptographic material/data.

According to a second aspect of the present invention, a method for cryptoagile network management includes the steps of transmitting, by one of a plurality of local devices in a local network, requests with cryptographic requirements for execution of cryptographic operations and/or for provision of cryptographic material/data to an anchor selection provider; selecting, by the anchor selection provider and based on at least the received cryptographic requirements, one or more of first hardware trust anchors of a first anchor type and one or more of second hardware trust anchors of a second anchor type different from the first anchor type; by the selected one or more of first hardware trust anchors, executing requested cryptographic operations and/or processing requested cryptographic information items according to a number of first cryptographic algorithms; by the selected one or more of second hardware trust anchors, executing requested cryptographic operations and/or processing requested cryptographic information items according to a number of second cryptographic algorithms different from the first cryptographic algorithms; and providing, by the anchor selection provider, the results of the requested cryptographic operations and/or the processed requested cryptographic material/data to the respective ones of the plurality of local devices.

Trust anchors are modules within a hierarchical network structure that are deemed to be an authoritative entity for a level of trust corresponding to its position in the hierarchy. Hardware trust anchors (HTA) are trust anchors that are implemented in hardware and that use physical isolation mechanisms to mitigate illegitimate and/or maliciously motivated accesses to data sensitive under security aspects, such as for example cryptographic keys, and to execution of cryptographic operations, such as for example certification acts or validation of cryptographic signatures.

HTAs are often implemented in industrial devices or network environments as secure elements to anchor an unforgeable identity within the device or the network. This can be achieved in the form of a firmware-based trusted platform modules, dedicated FPGAs, trusted execution environments, physically unclonable functions, crypto-controllers or hardware security modules.

HTAs may, for example, be implemented as dedicated hardware modules such as for example standalone security chips that have distinct hardware communication interfaces to external components or devices. For example, a dedicated hardware module may be a so-called Trusted Platform Module (TPM) which is a security co-processor having advanced security functionalities.

Alternatively, for example, HTAs may be implemented as sub-modules in a larger security system, i.e. as physically isolated regions within a host system in which cryptographic operations are shielded against physical access from the host system. For example such as a security submodule may be embodied as a Secure Hardware Extension (SHE) which is an on-chip security extension for microcontrollers or as a Hardware Security Module (HSM).

Finally, HTAs may, for example, also be implemented as Trusted Execution Environments (TEEs). Such TEEs are instantiations of a fenced environment using peripherals and/or other components of the host system in order to securely run protected applications.

Any of such HTAs and other modules within the cryptoagile network, such as the anchor selection provider and/or the network devices itself, may utilize computing devices which may be implemented as any device, or any means, for computing, in particular for executing a software, an App, or an algorithm. For example, a computing device may comprise at least one processing unit such as at least one central processing unit, CPU, and/or at least one graphics processing unit, GPU, and/or at least one field-programmable gate array, FPGA, and/or at least one application-specific integrated circuit, ASIC, and/or any combination of the foregoing. The computing device may further comprise a working memory operatively connected to the at least one processing unit and/or a non-transitory memory operatively connected to the at least one processing unit and/or the working memory. The computing device may be implemented partially and/or completely in a local apparatus (e.g., a personal computer, PC) and/or partially and/or completely in a remote system such as by a cloud computing platform.

The components of the HTAs and the anchor selection provider are broadly understood as entities capable of acquiring, obtaining, receiving or retrieving generic data and/or instructions through a user interface and/or programming code and/or executable programs or any combination thereof. In particular, the components and subunits of the anchor selection provider mentioned hereafter are adapted to run programming code and executable programs and to deliver the results for further processing.

All of the elements of the system of the invention may be realized in hardware and/or software, cable-bound and/or wireless, and in any combination thereof. Any of the elements may comprise an interface to an intranet or the Internet, to a cloud computing service, to a remote server and/or the like.

In particular, the system of the invention may be implemented partially and/or completely in a local apparatus, e.g. a computer, in a system of computers and/or partially and/or completely in a remote system such as a cloud computing platform.

In systems based on cloud computing technology, a large number of devices is connected to a cloud computing system via the Internet. The devices may be located in a remote facility connected to the cloud computing system. For ex-ample, the devices can comprise, or consist of, equipment, sensors, actuators, robots, and/or machinery in an industrial set-up(s). The devices can be medical devices and equipment in a healthcare unit. The devices can be home appliances or office appliances in a residential/commercial establishment.

The cloud computing system may enable remote configuring, monitoring, controlling, and maintaining connected devices (also commonly known as 'assets'). Also, the cloud computing system may facilitate storing large amounts of data periodically gathered from the devices, analyzing the large amounts of data, and providing insights (e.g., Key Performance Indicators, Outliers) and alerts to operators, field engineers or owners of the devices via a graphical user interface (e.g., of web applications). The insights and alerts may enable controlling and maintaining the devices, leading to efficient and fail-safe operation of the devices. The cloud computing system may also enable modifying parameters associated with the devices and issues control commands via the graphical user interface based on the insights and alerts.

The cloud computing system may comprise a plurality of servers or processors (also known as 'cloud infrastructure'), which are geographically distributed and connected to each other via a network. A dedicated platform (hereinafter referred to as 'cloud computing platform') is installed on the servers/processors for providing above functionality as a service (hereinafter referred to as 'cloud service'). The cloud computing platform may comprise a plurality of software programs executed on one or more servers or processors of the cloud computing system to enable delivery of the requested service to the devices and its users.

One or more application programming interfaces (APIs) are deployed in the cloud computing system to deliver various cloud services to the users.

Although here, in the foregoing and in the following, some functions are described as being performed by modules, it shall be understood that this does not necessarily mean that such modules are provided as entities separate from one another. In cases where one or more modules are provided as software, the modules may be implemented by program code sections or program code snippets, which may be distinct from one another but which may also be interwoven.

Similarly, in case where one or more modules are provided as hardware, they functions of one or more modules may be provided by one and the same hardware component, or the functions of one module or the functions of several modules may be distributed over several hardware components which need not necessarily correspond to the modules one-to-one. Thus, any apparatus, system, method and so on which exhibits all of the features and functions ascribed to a specific module shall be understood to comprise, or implement, said module.

In particular, it is a possibility that all modules are implemented by program code executed by a computing device, e.g. a server or a cloud-computing platform.

Additional advantageous embodiments, refinements, or variants of embodiments, will be apparent from the dependent claims as well as from the description in combination with the attached drawings.

In some advantageous embodiments, refinements, or variants of embodiments, the anchor selection provider may further be configured to send parameters and/or detailed information in the received request of the local devices to the selected ones of the first and second hardware trust anchors for further processing in the execution of the requested cryptographic operations and/or the provision of the requested cryptographic material/data. This advantageously allows otherwise generic cryptographic operations to be tailored towards the needs of the requesting local devices.

In some advantageous embodiments, refinements, or variants of embodiments, received requests of the local devices may include indications of abstract levels for required characteristics of the requested cryptographic operations and/or the requested cryptographic material/data. Transmitting indications of abstract levels for required characteristics affords more leeway to the anchor selection provider to select one or more of suitable hardware trust anchors to provide the requested cryptographic operations and/or cryptographic material/data.

In some advantageous embodiments, refinements, or variants of embodiments, the anchor selection provider may include a request collection module configured to collect and group up requests from different local devices. This advantageously allows for easier prioritization of incoming requests and a more efficient use of available cryptographic resources.

In some advantageous embodiments, refinements, or variants of embodiments, the anchor selection provider may include an anchor discovery module configured to determine which ones of the first and second hardware trust anchors are available during runtime. This allows for dynamic adaptation to inadvertent faults or non-availability of hardware trust anchors without deteriorating the operation and lowering the uptime of the whole network.

In some advantageous embodiments, refinements, or variants of embodiments, the anchor selection provider may include a reference interface coupled to an external reference database configured to read in current information regarding recommended, discontinued and/or outdated cryptographic algorithms and cryptographic parameters. In several of those advantageous embodiments, refinements, or variants of embodiments, the network may further comprise a configuration storage and the anchor selection provider may further include a configuration module, the configuration module being configured to update predefined selection configurations for the anchor selection provider stored in the configuration storage on the basis of current information received via the reference interface. This advantageously allows fast and agile incorporation of information from trusted outside source with respect to changes in the trust status of certain cryptographic algorithms without having to update the software or to replace hardware in the network.

In some advantageous embodiments, refinements, or variants of embodiments, the anchor selection provider may be configured to select different ones of the first and second hardware trust anchors to have a particular cryptographic operation to be executed utilizing different cryptographic algorithms. This advantageously allows for hybrid cryptographic algorithms to be implemented during runtime, increasing the security level of the cryptographic operations as desired or needed.

In some advantageous embodiments, refinements, or variants of embodiments of the method according to the second aspect of the invention, the method may further comprise a step of collecting and grouping up, by the anchor selection provider, requests from different local devices.

In some advantageous embodiments, refinements, or variants of embodiments of the method according to the second aspect of the invention, the method may further comprise a step of performing, by the anchor selection provider, an anchor discovery process to determine which ones of the first and second hardware trust anchors are available during runtime.

In some advantageous embodiments, refinements, or variants of embodiments of the method according to the second aspect of the invention, the method may further comprise a step of receiving, by the anchor selection provider, current information regarding recommended, discontinued and/or outdated cryptographic algorithms and cryptographic parameters from a reference database external to the local network, and updating predefined selection configurations for the anchor selection provider stored in a configuration storage on the basis of the current information.

In some advantageous embodiments, refinements, or variants of embodiments of the method according to the second aspect of the invention the step of selecting one or more of first and hardware trust anchors may include selecting one or more of first and hardware trust anchors to have a particular cryptographic operation to be executed utilizing different cryptographic algorithms.

It shall be understood that the method according to the second aspect of the present invention may be used with the system according any embodiment of the first aspect of the present invention. Therefore, any variants, options, or refinements described with respect to the system according to the first aspect may be equally applied to the method according to the second aspect of the present invention and vice versa. For the sake of brevity, therefore, mainly the different modules and functions of the system will be described, and it shall be understood that the methods taught herein may be adapted to perform any of the functions described therein.

According to a third aspect, the invention provides a computer program product comprising executable program code configured to, when executed by a computing device, perform the method according to any embodiment of the second aspect of the present invention.

According to a fourth aspect, the invention provides a non-transient computer-readable data storage medium comprising executable program code configured to, when executed by a computing device, perform the method according to any embodiment of the second aspect of the present invention.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

According to a fifth aspect, the invention provides a data stream comprising, or configured to generate, executable program code configured to, when executed, perform the method according to any embodiment of the second aspect of the present invention.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.

In the figures:
- Fig. 1: schematically illustrates a functional block diagram of a cryptoagile network environment according to an embodiment of the present invention;
- Fig. 2: schematically illustrates stages of a flow diagram of a method for cryptoagile network management according to an embodiment of the present invention;
- Fig. 3: shows a computer program product according to another embodiment of the present invention; and
- Fig. 4: shows a data storage medium according to yet another embodiment of the present invention.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

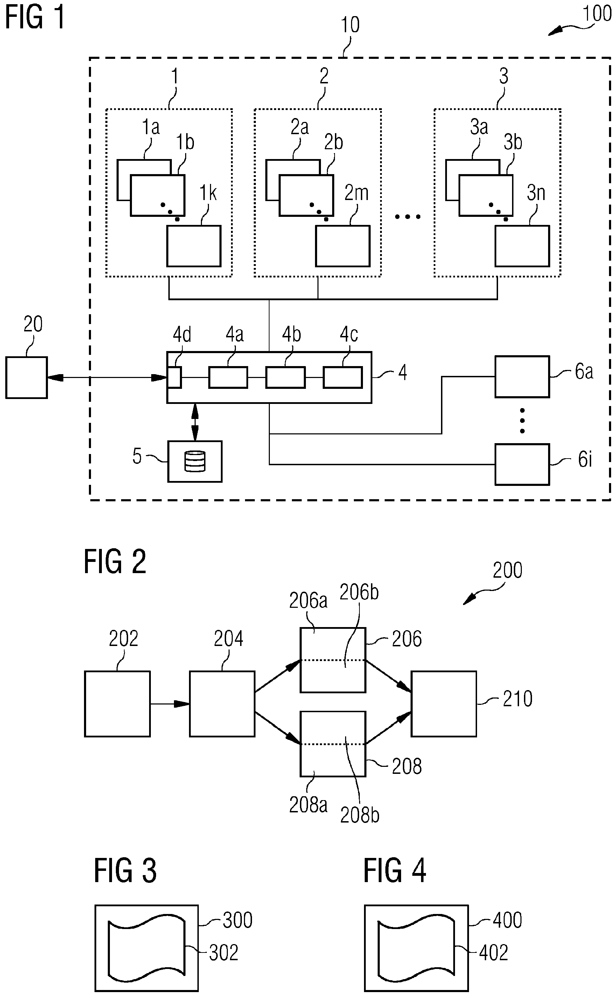

Fig. 1 schematically illustrates a functional block diagram of a cryptoagile network environment 100 according to an embodiment of the present invention. The network environment 100 may for example be an industrial IT system, a cloud computing environment, or any similar system environment. In other possible implementations, the network environment 100 may for example be embodied entirely on an electronic device.

The network environment 100 includes a local and/or trusted network 10 including a number of local devices 6a to 6i which may be configured to communicate securely within the trusted network 10, i.e. among each other, and/or with other devices outside the trusted network. A number of two local devices 6a to 6i is exemplarily depicted in Fig. 1, however, any other number of local devices 6a to 6i with i being any natural number may equally be implemented. In some implementations, the local devices 6a to 6i may be separate hardware entities in an industrial IT system, a cloud computing environment, or any similar system environment. In some other possible implementations, the local devices 6a to 6i may be applications or instances of programs running on an electronic device incorporating the network environment 100.

The local devices 6a to 6i require cryptographic operations and cryptographic material to be securely provided in order to communicate among each other and/or with other devices outside the trusted network 10. To that end, a number of hardware trust anchors (HTAs) may be provided.

The HTAs may be located within the trusted network 10 as secure elements accessible by the local devices 6a to 6i via a middleware component. The middleware component is implemented as an anchor selection provider 4 that brokers access of any of the local devices 6a to 6i to one or more of the HTAs.

The local devices 6a to 6i transmit a request with their respective cryptographic requirements (and possibly other requirements regarding performance, stability, redundancy or similar) to the anchor selection provider 4 which in turn selects one or more of the HTAs for execution of the required cryptographic operations and/or for provision of the desired cryptographic material/data. The anchor selection provider 4 may send any particular parameters and/or detailed information in the transmitted request of the local devices 6a to 6i to the selected HTAs for further processing in the execution of the requested cryptographic operations and/or the provision of the requested cryptographic material/data.

The trusted network 10 includes a number of HTAs of different type and/or functionality. For example, the trusted network 10 may include one or more HTAs 1a to 1k of a first trusted anchor type 1, one or more HTAs 2a to 2m of a second trusted anchor type 2 different from the first trusted anchor type 1, and one or more HTAs 3a to 3n of a third trusted anchor type 3 different from both the first trusted anchor type 1 and the second trusted anchor type 2. The number of different trusted anchor types is exemplarily depicted as being three in Fig. 3, however, any other number of trusted anchor types may equally be implemented. Similarly, the number of HTAs of each trusted anchor type 1, 2, and 3 may differ as well, with k, m, and n being mutually independent natural numbers.

Due to the availability of different trusted anchor types 1, 2, and 3, the anchor selection provider 4 may cover different requirements requested by the local devices 6a to 6i. For example, the cryptographic requirements contained in the request transmitted by the local devices 6a to 6i to the anchor selection provider 4 may include one or more of the following:
- A choice of cryptographic algorithm during key generation, for example AES, 3DES, ECC, ECDSA, DSA, RSA, LMS, CRYSTALS-Dilithium, FALCON, SPHINCS+ or any similar algorithm
- The bit length of the cryptographic key during key generation
- A pre-defined security level for the key generation process
- A request for a quantum-resistent cryptographic algorithm
- A choice of cryptographic algorithm during data encryption, for example AES, SHA, SHA-2, SHA-3, ECC, RSA, LMS, CRYSTALS-Dilithium, FALCON, SPHINCS+ or any similar algorithm
- A choice of cryptographic algorithm during one-way data encryption, for example MD5, SHA, SHA-2, SHA-3, or any similar hashing algorithm
- A request for multiple different cryptographic algorithms to be used simultaneously or in a hybrid process as protection against post-quantum attacks
- An indication whether multiple HTAs of the same trusted anchor type or of different trusted anchor types should be used for certain cryptographic operations, such as for example signature generation, random number generation, encryption, hashing or similar
- Indications of abstract levels for required characteristics of the cryptographic operations and/or keys, such as for example data integrity, deniability, privacy, performance and similar

Specifically, transmitting indications of abstract levels for required characteristics of the cryptographic operations and/or keys affords more leeway to the anchor selection provider 4 to select one or more of suitable HTAs to provide the requested cryptographic operations and/or keys. For example, the indications of abstract levels may be selected according to an ordinal scale of importance and/or relevance of the respective characteristics. This enables a more efficient utilization of available resources.

The accesses to the different HTAs are controlled by the anchor selection provider 4. In particular, the anchor selection provider 4 may include a request collection module 4c which collects and groups up requests from different local devices 6a to 6i. The request collection module 4c may withhold the requests for a predefined or variable amount of time in a prioritization list until the available resources of the various HTAs of different anchor types 1, 2, and 3 may be optimally utilized for serving the pending requests in the request collection module 4c.

The anchor selection provider 4 may in some cases employ machine learning to optimize the selection of various HTAs of different anchor types 1, 2, and 3 at runtime. Such machine learning may also be used by the anchor selection provider 4 to provide feedback and/or suggestions to the local devices 6a to 6i based on the specifics of their respective requests and the experience of the anchor selection provider 4 with similar requests in the past, for example regarding the choice of requested cryptographic algorithm or the combination of different HTA anchor types 1, 2, and 3.

The anchor selection provider 4 may additionally or alternatively include an anchor discovery module 4b configured to dynamically and periodically determine all HTAs of various anchor types 1, 2, and 3 as well as their respective number that are available at any given time during runtime. The anchor discovery module 4b may be assisted by information provided by the various HTAs 1a to 1k, 2a to 2m, and 3a to 3n which may feedback operation information, for example about their capacity, the version of their firmware, their age, their current load and other similar specifics.

If the anchor selection provider 4 utilizes HTAs 1a to 1k, 2a to 2m, or 3a to 3n that are communicating within and/or outside the network environment 100, the anchor selection provider 4 may safeguard the communication by means of suitable and appropriate secure network communication.

The anchor selection provider 4 may in some implementations further include a reference interface 4d coupled to an external reference database 20 from which current information regarding recommended, discontinued and/or outdated cryptographic algorithms and cryptographic parameter, such as for example insufficient key lengths or disparaged hash functions, may be read in. The reference interface 4d may optionally be a protected interface. A configuration module 4a of the anchor selection provider 4 may take into account such externally obtained information and update predefined configurations that may, for example, be stored in a configuration storage 5 external to the anchor selection provider 4. The anchor selection provider 4 may access configuration data sets stored in the configuration storage 5 in order to quickly configure a selection of HTAs of various anchor types 1, 2, and 3 according to similar requests received from the local devices 6a to 6i.

If one of the HTAs 1a to 1k, 2a to 2m, or 3a to 3n that was to be selected initially fails or is overloaded, the anchor selection provider 4 may be configured to select another one of the HTAs 1a to 1k, 2a to 2m, or 3a to 3n or similar or analogous capabilities in order to fulfil the request of one of the local devices 6a to 6i. In some implementations, such change or replacement of one of the HTAs may not be notified to the local device 6a to 6i so that the requesting process by the local device 6a to 6i is not disturbed or altered. In some implementations, the anchor selection provider 4 may request feedback from the respective local device 6a to 6i to indicate a replacement HTA to be used.

In some variations, the anchor selection provider 4 may have a particular cryptographic operation be performed utilizing different ones of the HTAs 1a to 1k, 2a to 2m, or 3a to 3n. For example, a digital signature of a document and/or of its hash value may be validated by different sources, i.e. in different ones of the HTAs. This way, a multi-way signature may be generated that is as strong as its strongest constituent validation algorithm. Such hybrid signature validation procedures may use a mix of classical and post-quantum validation algorithms.

Fig. 2 schematically illustrates stages of a flow diagram of a method 200 for cryptoagile network management according to an embodiment of the present invention.

The method 200 of Fig. 2 may be used within the network environment 100 as explained and illustrated in conjunction with Fig. 1, but also separately therefrom. Accordingly, all options, variants and refinements described for the system according to the first aspect of the present invention, in particular to the network environment 100, are equally applicable to the method 200 of Fig. 2, and vice versa.

In a step 202, one or more of a plurality of local devices 6a, ..., 6i in a local or trusted network 10, transmit requests with cryptographic requirements for execution of cryptographic operations and/or for provision of cryptographic material/data to an anchor selection provider 4 in the local network.

In a step 204, the anchor selection provider 4 selects, based on the received cryptographic requirements, one or more of first hardware trust anchors 1a, ..., 1k of a first anchor type 1 and one or more of second hardware trust anchors 2a, ..., 2m of a second anchor type 2 different from the first anchor type 1.

Depending on whether one or more of the first hardware trust anchors 1a, ..., 1k and one or more of the second hardware trust anchors 2a, ..., 2m have been selected by the anchor selection provider 4, different steps 206 and 208 may be performed in parallel/simultaneously or in sequence.

Selected first hardware trust anchors 1a, ..., 1k, execute in a partial step 206a requested cryptographic operations and/or process requested cryptographic information items in a partial step 206b according to a number of first cryptographic algorithms. Similarly, selected second hardware trust anchors 2a, ..., 2m, execute in a partial step 208a requested cryptographic operations and/or process requested cryptographic information items in a partial step 208b according to a number of second cryptographic algorithms different from the first cryptographic algorithms.

Finally, the anchor selection provider 4 coordinates the results of the cryptographic operations and/or gathers the requested cryptographic information items from the selected first and/or second hardware trust anchors and provides them, in a step 210, to the respective ones of the plurality of local devices 6a, ..., 6i.

Fig. 3 shows a schematic block diagram illustrating a computer program product 300 according to an embodiment of the fourth aspect of the present invention. The computer program product 300 comprises executable program code 302 configured to, when executed, perform the method according to any embodiment of the second aspect of the present invention in particular as has been described with respect to the preceding figures.

Fig. 4 shows a schematic block diagram illustrating a non-transitory computer-readable data storage medium 400 according to an embodiment of the fifth aspect of the present invention. The data storage medium 400 comprises executable program code 402 configured to, when executed, perform the method according to any embodiment of the second aspect of the present invention, in particular as has been described with respect to the preceding figures.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

This disclosure relates to industrial networks that enable the implementation of cryptoagility in secure environments. By combining, selecting and sometimes simultaneously using secure hardware elements of different types a central selection provider within the device or the network allows one or more connected applications or network devices to gain access to cryptographic functionality with the required security level guaranteed over the lifetime of the systems. Industrial networks with such selection providers enable cryptoagility without having to replace the hardware of embedded systems during its lifetime for reasons of cryptographic security. Moreover, the selection provider avoids having to adapt software applications since the interface between the selection provider and the secure hardware elements of different types is translated into a protocol-agnostic accessibility for the connected applications or network devices. Finally, strategies for securing defects or faulty behavior in single secure hardware elements, for supporting balanced load of secure hardware elements and for distributing the resources efficiently may be facilitated by the selection provider. Independent of the grammatical term usage, individuals with male, female or other gender identities are included within the term.

## Claims

1. A cryptoagile network (10), comprising:
a plurality of local devices (6a, ..., 6i);
one or more first hardware trust anchors (1a, ..., 1k) of a first anchor type (1), the first hardware trust anchors (1a, ..., 1k) being configured to perform cryptographic operations and/or process cryptographic information items according to a number of first cryptographic algorithms;
one or more second hardware trust anchors (2a, ..., 2m) of a second anchor type (2) different from the first anchor type (1), the second hardware trust anchors (2a, ..., 2m) being configured to perform cryptographic operations and/or process cryptographic information items according to a number of second cryptographic algorithms different from the first cryptographic algorithms; and
an anchor selection provider (4) coupled between the plurality of local devices (6a, ..., 6i) and the first and second hardware trust anchors, the anchor selection provider (4) being configured to receive requests with cryptographic requirements for execution of cryptographic operations and/or for provision of cryptographic material/data from the plurality of local devices (6a, ..., 6i) and to select, based on the received cryptographic requirements, one or more of the first and second hardware trust anchors for execution of the requested cryptographic operations and/or for provision of the requested cryptographic material/data.

2. The network (10) of claim 1, wherein the anchor selection provider (4) is further configured to send parameters and/or detailed information in the received request of the local devices (6a, ..., 6i) to the selected ones of the first and second hardware trust anchors for further processing in the execution of the requested cryptographic operations and/or the provision of the requested cryptographic material/data.

3. The network (10) of claim 1 or 2, wherein received requests of the local devices (6a, ..., 6i) includes indications of abstract levels for required characteristics of the requested cryptographic operations and/or the requested cryptographic material/data.

4. The network (10) of one of the claims 1 to 3, wherein the anchor selection provider (4) includes a request collection module (4c) configured to collect and group up requests from different local devices (6a, ..., 6i).

5. The network (10) of one of the claims 1 to 4, wherein the anchor selection provider (4) includes an anchor discovery module (4b) configured to determine which ones of the first and second hardware trust anchors are available during runtime.

6. The network (10) of any of the claims 1 to 5, wherein the anchor selection provider (4) further includes a reference interface (4d) coupled to an external reference database (20) configured to read in current information regarding recommended, discontinued and/or outdated cryptographic algorithms and cryptographic parameters.

7. The network (10) of claim 6, further comprising a configuration storage (5) and the anchor selection provider (4) further including a configuration module (4a), the configuration module (4a) being configured to update predefined selection configurations for the anchor selection provider (4) stored in the configuration storage (5) on the basis of current information received via the reference interface (4d).

8. The network (10) of any of the claims 1 to 7, wherein the anchor selection provider (4) is configured to select different ones of the first and second hardware trust anchors to have a particular cryptographic operation to be executed utilizing different cryptographic algorithms.

9. A method (200) for cryptoagile network management, the method comprising:
transmitting (202), by one of a plurality of local devices (6a, ..., 6i) in a local network (10), requests with cryptographic requirements for execution of cryptographic operations and/or for provision of cryptographic material/data to an anchor selection provider (4);
selecting (204), by the anchor selection provider (4) and based at least on the received cryptographic requirements, one or more of first hardware trust anchors (1a, ..., 1k) of a first anchor type (1) and one or more of second hardware trust anchors (2a, ..., 2m) of a second anchor type (2) different from the first anchor type (1);
by the selected one or more of first hardware trust anchors (1a, ..., 1k), executing (206a) requested cryptographic operations and/or processing (206b) requested cryptographic information items according to a number of first cryptographic algorithms;
by the selected one or more of second hardware trust anchors (2a, ..., 2m), executing (208a) requested cryptographic operations and/or processing (208b) requested cryptographic information items according to a number of second cryptographic algorithms different from the first cryptographic algorithms; and
providing (210), by the anchor selection provider (4), the results of the requested cryptographic operations and/or the processed requested cryptographic material/data to the respective ones of the plurality of local devices (6a, ..., 6i) .

10. The method (200) of claim 9, further comprising the step of collecting and grouping up, by the anchor selection provider (4), requests from different local devices (6a, ..., 6i).

11. The method (200) of claim 9 or 10, further comprising the step of performing, by the anchor selection provider (4), an anchor discovery process to determine which ones of the first and second hardware trust anchors are available during runtime.

12. The method (200) of one of the claims 9 to 11, further comprising receiving, by the anchor selection provider (4), current information regarding recommended, discontinued and/or outdated cryptographic algorithms and cryptographic parameters from a reference database (20) external to the local network (10), and updating predefined selection configurations for the anchor selection provider (4) stored in a configuration storage (5) on the basis of the current information.

13. The method (200) of one of the claims 9 to 12, wherein the step of selecting (204) one or more of first and second hardware trust anchors includes selecting one or more of first and second hardware trust anchors to have a particular cryptographic operation to be executed utilizing different cryptographic algorithms.

14. A computer program product (300) comprising executable program code (302) configured to, when executed by a computing device, to perform the method (200) according to any of the claims 9 to 12.

15. A non-volatile, computer-readable data storage medium (400) comprising executable program code (402) configured to, when executed by a computing device, to perform the method (200) according to any of the claims 9 to 12.

## Patentansprüche

1. Kryptoagiles Netzwerk (10), umfassend:
eine Mehrzahl von lokalen Vorrichtungen (6a, ..., 6i);
einen oder mehrere erste Hardware-Vertrauensanker (1a, ..., 1k) eines ersten Ankertyps (1), wobei die ersten Hardware-Vertrauensanker (1a, ..., 1k) dazu konfiguriert sind, kryptografische Operationen durchzuführen und/oder kryptografische Informationselemente gemäß einer Anzahl erster kryptografischer Algorithmen zu verarbeiten;
einen oder mehrere zweite Hardware-Vertrauensanker (2a, ..., 2m) eines zweiten Ankertyps (2), der sich von dem ersten Ankertyp (1) unterscheidet, wobei die zweiten Hardware-Vertrauensanker (2a, ..., 2m) dazu konfiguriert sind, kryptografische Operationen durchzuführen und/oder kryptografische Informationselemente gemäß einer Anzahl zweiter kryptografischer Algorithmen, die sich von den ersten kryptografischen Algorithmen unterscheiden, zu verarbeiten; und
einen Ankerauswahlanbieter (4), der zwischen der Mehrzahl von lokalen Vorrichtungen (6a, ..., 6i) und den ersten und zweiten Hardware-Vertrauensankern gekoppelt ist, wobei der Ankerauswahlanbieter (4) dazu konfiguriert ist, Anfragen mit kryptografischen Anforderungen zur Ausführung kryptografischer Operationen und/oder zur Bereitstellung kryptografischen Materials/ kryptografischer Daten von der Mehrzahl von lokalen Vorrichtungen (6a, ..., 6i) zu empfangen und basierend auf den empfangenen kryptografischen Anforderungen einen oder mehrere des ersten und zweiten Hardware-Vertrauensankers zur Ausführung der angefragten kryptografischen Operationen und/oder zur Bereitstellung des angefragten kryptografischen Materials/der angefragten kryptografischen Daten auszuwählen.

2. Netzwerk (10) nach Anspruch 1, wobei der Ankerauswahlanbieter (4) ferner dazu konfiguriert ist,
Parameter und/oder detaillierte Informationen in der empfangenen Anfrage der lokalen Vorrichtungen (6a, ..., 6i) an die ausgewählten der ersten und zweiten Hardware-Vertrauensanker zur weiteren Verarbeitung bei der Ausführung der angefragten kryptografischen Operationen und/oder der Bereitstellung des angefragten kryptografischen Materials/der angefragten kryptografischen Daten sendet.

3. Netzwerk (10) nach Anspruch 1 oder 2, wobei die empfangenen Anfragen der lokalen Vorrichtungen (6a, ..., 6i) Angaben über Abstraktionsebenen für erforderliche Eigenschaften der angefragten kryptografischen Operationen und/oder des angefragten kryptografischen Materials/der angefragten kryptografischen Daten beinhalten.

4. Netzwerk (10) nach einem der Ansprüche 1 bis 3, wobei der Ankerauswahlanbieter (4) ein Anfragesammelmodul (4c) beinhaltet, das dazu konfiguriert ist, Anfragen von verschiedenen lokalen Vorrichtungen (6a, ..., 6i) zu sammeln und zu gruppieren.

5. Netzwerk (10) nach einem der Ansprüche 1 bis 4, wobei der Ankerauswahlanbieter (4) ein Ankerermittlungsmodul (4b) beinhaltet, das dazu konfiguriert ist, zu bestimmen, welche der ersten und zweiten Hardware-Vertrauensanker während einer Laufzeit verfügbar sind.

6. Netzwerk (10) nach einem der Ansprüche 1 bis 5, wobei der Ankerauswahlanbieter (4) ferner eine Referenzschnittstelle (4d) beinhaltet, die mit einer externen Referenzdatenbank (20) gekoppelt ist, die dazu konfiguriert ist, aktuelle Informationen über empfohlene, eingestellte und/oder veraltete kryptografische Algorithmen und kryptografische Parameter einzulesen.

7. Netzwerk (10) nach Anspruch 6, ferner umfassend einen Konfigurationsspeicher (5) und den Ankerauswahlanbieter (4), der ferner ein Konfigurationsmodul (4a) beinhaltet, wobei das Konfigurationsmodul (4a) dazu konfiguriert ist, vordefinierte Auswahlkonfigurationen für den Ankerauswahlanbieter (4), die in dem Konfigurationsspeicher (5) gespeichert sind, auf der Grundlage aktueller Informationen, die über die Referenzschnittstelle (4d) empfangen werden, zu aktualisieren.

8. Netzwerk (10) nach einem der Ansprüche 1 bis 7, wobei der Ankerauswahlanbieter (4) dazu konfiguriert ist, verschiedene der ersten und zweiten Hardware-Vertrauensanker auszuwählen, für die eine spezielle kryptografische Operation unter Verwendung verschiedener kryptografischer Algorithmen ausgeführt werden soll.

9. Verfahren (200) zur kryptoagilen Netzwerkverwaltung, wobei das Verfahren Folgendes umfasst:
Übertragen (202) von Anfragen mit kryptografischen Anforderungen zur Ausführung kryptografischer Operationen und/oder zum Bereitstellen kryptografischen Materials/ kryptografischer Daten durch eine von einer Mehrzahl von lokalen Vorrichtungen (6a, ..., 6i) in einem lokalen Netzwerk (10) an einen Ankerauswahlanbieter (4);
Auswählen (204) eines oder mehrerer erster Hardware-Vertrauensanker (1a, ..., 1k) eines ersten Ankertyps (1) und eines oder mehrerer zweiter Hardware-Vertrauensanker (2a, ..., 2m) eines zweiten Ankertyps (2), der sich von dem ersten Ankertyp (1) unterscheidet, durch den Ankerauswahlanbieter (4) und basierend mindestens auf den empfangenen kryptografischen Anforderungen;
Ausführen (206a) der angefragten kryptografischen Operationen und/oder Verarbeiten (206b) der angefragten kryptografischen Informationselemente gemäß einer Anzahl von ersten kryptografischen Algorithmen, durch den ausgewählten einen oder die mehreren der ersten Hardware-Vertrauensanker (1a, ..., 1k);
Ausführen (208a) der angefragten kryptografischen Operationen und/oder Verarbeiten (208b) der angefragten kryptografischen Informationselemente gemäß einer Anzahl von zweiten kryptografischen Algorithmen, die sich von den ersten kryptografischen Algorithmen unterscheiden, durch den ausgewählten einen oder die mehreren der zweiten Hardware-Vertrauensanker (2a, ..., 2m); und
Bereitstellen (210) der Ergebnisse der angefragten kryptografischen Operationen und/oder des verarbeiteten angefragten kryptografischen Materials/ der kryptografischen Daten an die jeweiligen der Mehrzahl von lokalen Vorrichtungen (6a, ..., 6i), durch den Ankerauswahlanbieter (4).

10. Verfahren (200) nach Anspruch 9, ferner umfassend den Schritt des Sammelns und Gruppierens von Anfragen von verschiedenen lokalen Vorrichtungen (6a, ..., 6i) durch den Ankerauswahlanbieter (4).

11. Verfahren (200) nach Anspruch 9 oder 10, das ferner den Schritt des Durchführens eines Ankerermittlungsprozesses, um zu bestimmen, welche der ersten und zweiten Hardware-Vertrauensanker während einer Laufzeit verfügbar sind, durch den Ankerauswahlanbieter (4), umfasst.

12. Verfahren (200) nach einem der Ansprüche 9 bis 11, das ferner ein Empfangen aktueller Informationen über empfohlene, eingestellte und/oder veraltete kryptografische Algorithmen und kryptografische Parameter aus einer Referenzdatenbank (20) außerhalb des lokalen Netzwerks (10), durch den Ankerauswahlanbieter (4) und ein Aktualisieren vordefinierter Auswahlkonfigurationen für den Ankerauswahlanbieter (4), die in einem Konfigurationsspeicher (5) gespeichert sind, auf der Grundlage der aktuellen Informationen, umfasst.

13. Verfahren (200) nach einem der Ansprüche 9 bis 12, wobei der Schritt des Auswählens (204) eines oder mehrerer von ersten und zweiten Hardware-Vertrauensankern Auswählen eines oder mehrerer von ersten und zweiten Hardware-Vertrauensankern beinhaltet, für die eine spezielle kryptografische Operation unter Verwendung verschiedener kryptografischer Algorithmen ausgeführt werden soll.

14. Computerprogrammprodukt (300), umfassend ausführbaren Programmcode (302), der konfiguriert ist, um, wenn er durch eine Rechenvorrichtung ausgeführt wird, das Verfahren (200) nach einem der Ansprüche 9 bis 12 durchzuführen.

15. Nichtflüchtiges computerlesbares Datenspeichermedium (400), umfassend ausführbaren Programmcode (402), der konfiguriert ist, um, wenn er durch eine Rechenvorrichtung ausgeführt wird, das Verfahren (200) nach einem der Ansprüche 9 bis 12 durchzuführen.

## Revendications

1. Réseau (10) à agilité cryptographique, comprenant :
une pluralité de dispositifs locaux (6a, ..., 6i) ;
une ou plusieurs premières ancres de confiance matérielles (1a, ..., 1k) d'un premier type d'ancre (1), les premières ancres de confiance matérielles (1a, ..., 1k) étant configurées pour réaliser des opérations cryptographiques et/ou traiter des éléments d'informations cryptographiques selon un certain nombre de premiers algorithmes cryptographiques ;
une ou plusieurs deuxièmes ancres de confiance matérielles (2a, ..., 2m) d'un deuxième type d'ancre (2) différent du premier type d'ancre (1), les deuxièmes ancres de confiance matérielles (2a, ..., 2m) étant configurées pour réaliser des opérations cryptographiques et/ou traiter des éléments d'informations cryptographiques selon un certain nombre de deuxièmes algorithmes cryptographiques différents des premiers algorithmes cryptographiques ; et
un fournisseur de sélection d'ancres (4) couplé entre la pluralité de dispositifs locaux (6a, ..., 6i) et les premières et deuxièmes ancres de confiance matérielles, le fournisseur de sélection d'ancres (4) étant configuré pour recevoir des requêtes dotées d'exigences cryptographiques pour l'exécution d'opérations cryptographiques et/ou pour la fourniture de matériel cryptographique/de données cryptographiques provenant de la pluralité de dispositifs locaux (6a, ..., 6i) et pour sélectionner, sur la base des exigences cryptographiques reçues, une ou plusieurs ancres parmi les premières et deuxièmes ancres de confiance matérielles pour l'exécution des opérations cryptographiques requises et/ou pour la fourniture du matériel cryptographique requis/des données cryptographiques requises.

2. Réseau (10) selon la revendication 1, dans lequel le fournisseur de sélection d'ancres (4) est en outre configuré pour envoyer des paramètres et/ou des informations détaillées dans la requête reçue des dispositifs locaux (6a, ..., 6i) aux ancres sélectionnées parmi les premières et deuxièmes ancres de confiance matérielles pour un traitement ultérieur lors de l'exécution des opérations cryptographiques requises et/ou de la fourniture du matériel cryptographique requis/des données cryptographiques requises.

3. Réseau (10) selon la revendication 1 ou 2, dans lequel les requêtes reçues des dispositifs locaux (6a, ..., 6i) incluent des indications de niveaux d'abstraction pour des caractéristiques requises des opérations cryptographiques requises et/ou du matériel cryptographique requis/des données cryptographiques requises.

4. Réseau (10) selon l'une des revendications 1 à 3, dans lequel le fournisseur de sélection d'ancres (4) inclut un module de collecte de requêtes (4c) configuré pour collecter et regrouper des requêtes provenant de différents dispositifs locaux (6a, ..., 6i).

5. Réseau (10) selon l'une des revendications 1 à 4, dans lequel le fournisseur de sélection d'ancres (4) inclut un module de découverte d'ancres (4b) configuré pour déterminer quelles ancres parmi les premières et deuxièmes ancres de confiance matérielles sont disponibles pendant le temps d'exécution.

6. Réseau (10) selon l'une quelconque des revendications 1 à 5, dans lequel le fournisseur de sélection d'ancres (4) inclut en outre une interface de référence (4d) couplée à une base de données de référence (20) externe configurée pour lire des informations actuelles concernant des algorithmes cryptographiques et des paramètres cryptographiques recommandés, abandonnés et/ou obsolètes.

7. Réseau (10) selon la revendication 6, comprenant en outre un stockage de configurations (5) et le fournisseur de sélection d'ancres (4) incluant en outre un module de configuration (4a), le module de configuration (4a) étant configuré pour mettre à jour des configurations de sélection prédéfinies pour le fournisseur de sélection d'ancres (4) stockées dans le stockage de configurations (5) sur la base d'informations actuelles reçues par l'intermédiaire de l'interface de référence (4d).

8. Réseau (10) selon l'une quelconque des revendications 1 à 7, dans lequel le fournisseur de sélection d'ancres (4) est configuré pour sélectionner différentes ancres parmi les premières et deuxièmes ancres de confiance matérielles afin qu'une opération cryptographique particulière soit exécutée en utilisant différents algorithmes cryptographiques.

9. Procédé (200) de gestion de réseau à agilité cryptographique, le procédé comprenant :
l'émission (202), par l'un d'une pluralité de dispositifs locaux (6a, ..., 6i) dans un réseau local (10), de requêtes dotées d'exigences cryptographiques pour l'exécution d'opérations cryptographiques et/ou pour la fourniture de matériel cryptographique/de données cryptographiques vers un fournisseur de sélection d'ancres (4) ;
la sélection (204), par le fournisseur de sélection d'ancres (4) et sur la base au moins des exigences cryptographiques reçues, d'une ou de plusieurs premières ancres de confiance matérielles (1a, ..., 1k) d'un premier type d'ancre (1) et d'une ou de plusieurs deuxièmes ancres de confiance matérielles (2a, ..., 2m) d'un deuxième type d'ancre (2) différent du premier type d'ancre (1) ;
par les une ou plusieurs ancres sélectionnées parmi les premières ancres de confiance matérielles (1a, ..., 1k), l'exécution (206a) d'opérations cryptographiques requises et/ou le traitement (206b) d'éléments d'informations cryptographiques requis selon un certain nombre de premiers algorithmes cryptographiques ;
par les une ou plusieurs ancres sélectionnées parmi les deuxièmes ancres de confiance matérielles (2a, ..., 2m), l'exécution (208a) d'opérations cryptographiques requises et/ou le traitement (208b) d'éléments d'informations cryptographiques requis selon un certain nombre de deuxièmes algorithmes cryptographiques différents des premiers algorithmes cryptographiques ; et
la fourniture (210), par le fournisseur de sélection d'ancres (4), des résultats des opérations cryptographiques requises et/ou du matériel cryptographique requis traité et/ou des données cryptographiques requises traitées aux dispositifs respectifs de la pluralité de dispositifs locaux (6a, ..., 6i).

10. Procédé (200) selon la revendication 9, comprenant en outre l'étape de la collecte et du regroupement, par le fournisseur de sélection d'ancres (4), de requêtes provenant de différents dispositifs locaux (6a, ..., 6i).

11. Procédé (200) selon la revendication 9 ou 10, comprenant en outre l'étape de la réalisation, par le fournisseur de sélection d'ancres (4), d'un processus de découverte d'ancre pour déterminer quelles ancres parmi les premières et deuxièmes ancres de confiance matérielles sont disponibles pendant le temps d'exécution.

12. Procédé (200) selon l'une des revendications 9 à 11, comprenant en outre la réception, par le fournisseur de sélection d'ancres (4), d'informations actuelles concernant des algorithmes cryptographiques et des paramètres cryptographiques recommandés, abandonnés et/ou obsolètes provenant d'une base de données de référence (20) externe au réseau local (10), et la mise à jour de configurations de sélection prédéfinies pour le fournisseur de sélection d'ancres (4) stockées dans un stockage de configurations (5) sur la base des informations actuelles.

13. Procédé (200) selon l'une des revendications 9 à 12, dans lequel l'étape de la sélection (204) d'une ou de plusieurs ancres parmi les premières et deuxièmes ancres de confiance matérielles inclut la sélection d'une ou de plusieurs ancres parmi les premières et deuxièmes ancres de confiance matérielles afin qu'une opération cryptographique particulière soit exécutée en utilisant différents algorithmes cryptographiques

14. Produit de programme informatique (300) comprenant un code de programme exécutable (302) configuré pour, lorsqu'il est exécuté par un dispositif informatique, réaliser le procédé (200) selon l'une quelconque des revendications 9 à 12

15. Support de stockage de données non transitoire lisible par ordinateur (400) comprenant un code de programme exécutable (402) configuré pour, lorsqu'il est exécuté par un dispositif informatique, réaliser le procédé (200) selon l'une quelconque des revendications 9 à 12.
